Europäisches Patentamt

European Patent Office

Office européen des brevets

(11) Publication number: **0 414 430 A1**

# EUROPEAN PATENT APPLICATION

(21) Application number: **90308897.9**

(22) Date of filing: **13.08.90**

(51) Int. Cl.⁵: **H01S 3/16**

(30) Priority: **22.08.89 GB 8919071**
**18.10.89 GB 8923523**

(43) Date of publication of application:
**27.02.91 Bulletin 91/09**

(84) Designated Contracting States:
**AT BE CH DE DK ES FR GR IT LI LU NL SE**

(71) Applicant: **GEC-MARCONI LIMITED**
**The Grove, Warren Lane**
**Stanmore, Middlesex HA7 4LY(GB)**

(72) Inventor: **Gratze, Stephen Cecil**
**27 Church Road**
**Boreham. Essex(GB)**
Inventor: **Worboys, Michael Roy**
**16 Skylark Walk**
**Chelmsford, Essex CM2 8BB(GB)**

(74) Representative: **Cockayne, Gillian et al**
**The General Electric Company plc Patent**
**Department GEC Marconi Research Centre**
**West Hanningfield Road**
**Great Baddow, Chelmsford Essex CM2**
**8HN(GB)**

(54) **Lasers.**

(57) Dye lasers have used a dye in a liquid form. These dyes, and solvents in which they exist, have been hazardous and difficult to handle. The present invention provides a solid member having a dye chemically-bonded to a polymer, eg. PMMA. The percentage weight contribution of dye in the member (1) may be up to one half the total weight of the member (1). Members (1) may be assembled together in a magazine (6) so that several may be used together in lasers to allow rapid variation in output wavelength.

Fig 3

EP 0 414 430 A1

# LASERS

This invention relates to lasers and in one aspect to dye lasers.

Dye lasers are a particular type of laser whose lasing medium is in the form of a dye solution or dispersion in a liquid medium. The liquid medium supporting the dye is pumped around a closed circuit within the laser. Part of the circuit containing the dye is transparent, within the laser cavity, so as to allow laser light to emerge. The dye, after supporting lasing, is cooled and then pumped around the circuit until it once again returns to the laser cavity. Pumping takes place at very high flow velocities with flow rates of the order of 2cm³/sec. Eventually the dye becomes depleted and must be replaced.

Problems with dye lasers have been: firstly the hazardous nature of the liquid dye solutions or dispersions, which have often been either toxic and/or inflammable; and secondly the necessity for pumping equipment, which renders the laser less readily portable.

It has been proposed to disperse the dye into a solid polymer body; see for example GB-A-1255399, GB-A-1306583, GB-A-2002391, and US-A-3675157. However, a problem with this is achieving satisfactory uniformity of the dye, while ageing problems such as dye diffusion also render the performance of the laser unpredictable.

According to the present invention there is provided a dye laser in which the lasing medium is a light-transmissive body comprising a polymer having a dye chemically-bonded to the molecules thereof.

Preferably the dye is incorporated into the chemical structure by bonding the dye molecules onto individual monomer units, by way of a chain spacer molecule. This may be a carbon chain. Polymerisation thus yields a polymer whose dye content may be up to 50% by weight and whose lasing properties are substantially the same as the original dye solution or dispersion. The polymer may then be drawn into the desired shape of the light-transmissive member.

The shape and size of the light-transmissive member is tailored to suit the particular laser cavity. Replacing the member then becomes a matter of removing the depleted member and replacing it with a new one. Hazardous or toxic dyestuffs are thus no longer a problem.

Preferably the light-transmissive member has optical features integral with it. These may be formed when making the member and may be a mirror, a lens or a diffraction grating.

A further advantage of having the dye in the form of a solid member is that several such members may be arranged in a magazine. This allows rapid random permutation of laser output wavelengths as the magazine alters the particular light-transmissive member into and out of the laser cavity.

Preferably the dye is selected from the group of dyes comprising: Coumarin 102, Coumarin 504, Rhodamine 6G and Surlforhodamine 640. These dyes may be chemically bonded with host monomer units such as methyl methacrylate, although any transparent monomer which is substantially unaffected by light at the operating frequency may be used.

Figure 1 shows a section through a light-transmissive member in a laser;

Figure 2 shows a magazine mounted in a laser; and

Figures 3, 4 and 5 show three different types of magazine.

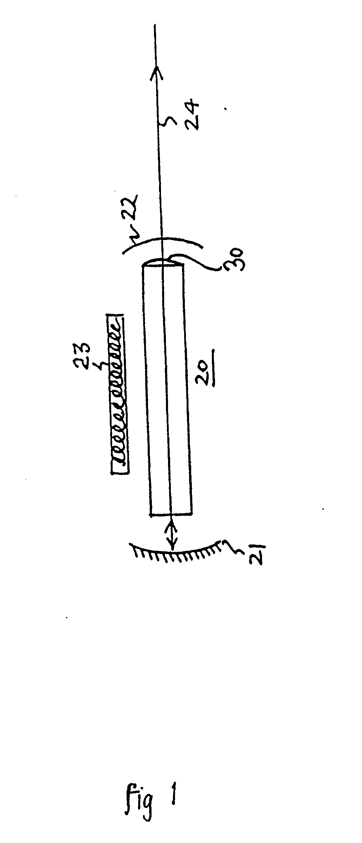

Referring firstly to Figure 1 a light-transmissive member 1 is mounted inside a laser cavity 20. Mirrors 21 and 22 are positioned at either end of the member. Mirror 21 is a fully reflective mirror, mirror 22 is partially reflective. The light transmissive member 1 has a convex face 30. A pump 23 initiates and maintains lasing within the member 1. Laser light 24 is shown emerging from the laser cavity through mirror 22 after having been focused by convex face 30.

The PMMA molecule has a carbon chain spacer group between the backbone carbon chain of the polymer and the dye molecule. The dye molecule is Rhodamine 6G. The lasing properties of the dye molecule are preserved, as the electronic transitions are not affected by attachment to the polymer backbone. The light-transmissive member 1 is extruded or drawn from a polymer preform and polished so as to produce high optical quality members.

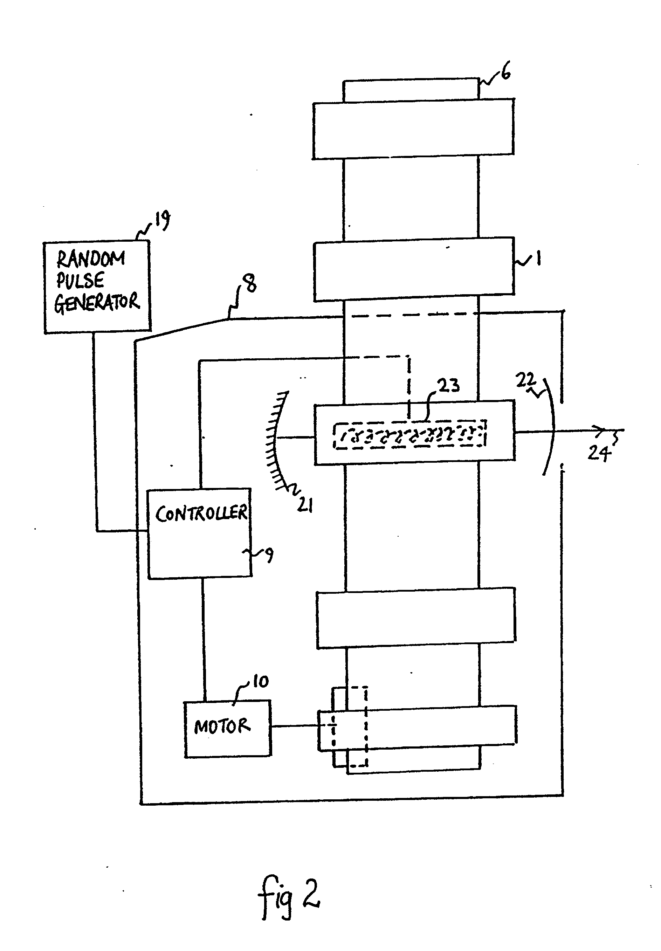

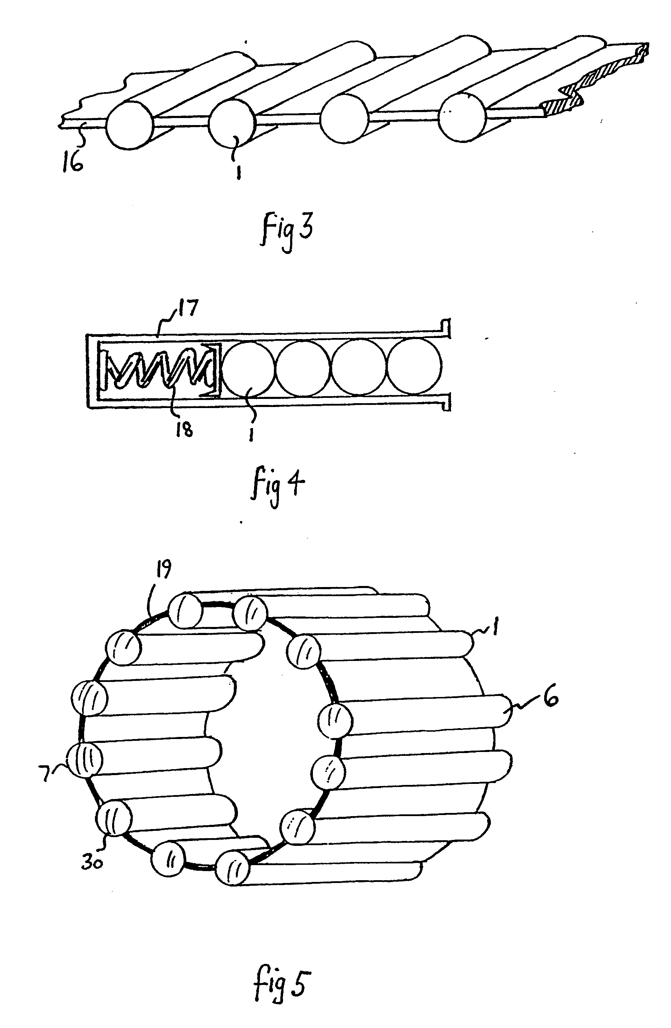

Figure 2 depicts magazine 6, (shown in detail in Figure 5) in a complete laser 8. A controller 9 is provided which synchronises the motion of the magazine 6 within the laser 8, with a laser pump source 23. The magazine 6 is driven by a stepper motor 10. This provides a rapid permutation of laser output colour as the magazine rotates clockwise and anticlockwise according to a random pulse generator 19, which is linked via the controller to the stepper motor 10. Alternatively the members may be arranged on a belt (shown in detail in Figure 3) and fed through the laser cavity backwards and forwards.

Referring to Figures 3, 4 and 5 several light-transmissive members 1 are assembled in different magazines.

The magazine depicted in Figure 3, has individual light-transmissive members in a supporting belt 16. The belt passes through the laser cavity 20. The light-transmissive members may have all the same dye or the belt may be made up of different types of dye carrying members.

The magazine depicted in Figure 4, is similar to the type of magazine associated with machine guns. Light-transmissive members 1 are forced out of a rigid magazine housing 17 by an ejection spring 18.

The magazine depicted in Figure 5, has 12 light-transmissive members arranged in a loop 19. The loop supports the members and enables the magazine to be used in the way described below. The members have convex faces 7 so that they act as lenses. They may have other optical devices, such as a mirror or grating, at one or both ends.

## Claims

1. A dye laser, in which the lasing medium is a light-transmissive body comprising a polymer having a dye chemically-bonded to the molecules thereof.

2. A dye laser, in which the body is a solid body formed from said polymer.

3. A dye laser according to Claim 1 or 2, wherein the molecules of the dye are bonded to the main chain of the polymer molecules.

4. A dye laser according to Claim 1, 2 or 3, wherein at least one further dye is bonded to the polymer.

5. A dye laser according to any preceding claim, wherein the or each dye is selected from Rhodamine 6G, Coumarin 102, Coumarin 504, and Surlforhodamine 640.

6. A dye laser according to any preceding claim, also comprising means for removably mounting the light-transmissive body at an operative position within the laser.

7. A dye laser according to Claim 6, wherein said means for removably mounting the body comprises a magazine mounting a plurality of such bodies and means for moving the magazine relative to the laser whereby the bodies may be selectively moved into and out of the operative position.

8. A dye laser according to any preceding claim, wherein the or each body incorporates a mirror and/or an optical element.

9. A dye laser according to Claim 8, wherein the optical element is a lens.

fig 1

fig 2

Fig 3

fig 4

fig 5

European
Patent Office

**EUROPEAN SEARCH
REPORT**

Application Number

**EP 90 30 8897**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | ELECTRONICS AND COMMUNICATIONS IN JAPAN, vol. 71, no. 10, part 2, October 1988, pages 47-51; S. MUTO et al.: "Tunable laser using sheet of dye-doped plastic fibers" * Total * | 1-5,8,9 | H 01 S 3/16 |
| Y | IDEM | 6,7 | |
| Y | US-A-4 523 319  (D.R. PFOST) * Abstract; claims 1-15; figures 1-3 * | 6,7 | |

| | |
|---|---|
| | TECHNICAL FIELDS SEARCHED (Int. Cl.5) |
| | H 01 S |

The present search report has been drawn up for all claims

| Place of search | Date of completion of search | Examiner |
|---|---|---|
| The Hague | 12 November 90 | MALIC K. |

CATEGORY OF CITED DOCUMENTS

X : particularly relevant if taken alone
Y : particularly relevant if combined with another
   document of the same catagory
A : technological background
O : non-written disclosure
P : intermediate document
T : theory or principle underlying the invention

E : earlier patent document, but published on, or after
   the filing date
D : document cited in the application
L : document cited for other reasons

& : member of the same patent family, corresponding
   document